Europäisches Patentamt

(19) European Patent Office (11) Publication number: **0 019 096**

Office européen des brevets **A1**

(12) **EUROPEAN PATENT APPLICATION**

(21) Application number: **80102104.9**

(22) Date of filing: **18.04.80**

(51) Int. Cl.³: **H 02 M 3/155**
**H 02 M 7/155**

(30) Priority: **21.05.79 US 41132**

(43) Date of publication of application:
**26.11.80 Bulletin 80/24**

(84) Designated Contracting States:
**DE FR GB**

(71) Applicant: **Ford Aerospace & Communications
Corporation
3939 Fabian Way
Palo Alto, Cal. 94303(US)**

(72) Inventor: **Hosick, Daryl Keith
126 Oak Knoll Drive
Santa Cruz, Cal. 95060(US)**

(74) Representative: **Reinländer & Bernhardt Patentanwälte
Orthstrasse 12
D-8000 München 60(DE)**

(54) DC-DC converter with current and voltage regulation.

(57) A DC-DC-Converter of the switching type is disclosed with energy storage on the primary side (6) of the isolation transformer (5). Four transistors (1,2,3,4) or other switching devices are switched sequentially to convert the unregulated input direct current to alternating current. If no rectifiers are used, the output is a substantially squarewave alternating current and hence the device can be used as a DC-AC converter. Multiple outputs (30,40,60) can be used; when the load through them is varied, the output voltage on the other outputs does not appreciably change. The device has a high efficiency (over 85 percent), is current limited, and has no minimum or maximum output voltage limitations. An inductor (21) is employed on the primary side (6) of the transformer (5) for temporary storage during the switching of the transistors (1,2,3,4). The output voltage is regulated by means of pulse width modulation.

EP 0 019 096 A1

./...

Croydon Printing Company Ltd.

FIG.1

## BACKGROUND OF THE INVENTION

1. Field of the Invention. This invention is a DC-DC converter and a DC-AC converter utilizing four switching transistors and energy storage on the input side of an isolation transformer. This type of converter is widely used in spacecraft and in computers.

2. Description of the Prior Art. A prior art search has disclosed the following U.S. Patents:

U.S. Patent 3,925,715 discloses a DC-DC converter with inductor 17 on the input side of transformer 12. However, in this patent there is no way to couple energy from the inductor 17 to the load 46 without going through power supply 16. The consequences of this are that one cannot current limit this converter. For example, during turn-on, the output filter capacitors cause a large current surge on the output, stressing and possibly destroying component 16 and transistors 26, 23, 29, and 31. Also, there is no ready means to protect the circuit if somebody shorts out the output. On the other hand, the converter of the present invention is current limited to prevent damage to the power transistors due to large inrush currents during turn-on or output overload. The voltage stress on the transistors is less and the converter can be operated in a current mode if desired (i.e., it can be used as a current source as well as a voltage source).

Furthermore, in patent 3,925,715 a bigger transformer is necessary to achieve the same results as in the present invention. In the present invention the magnetic components are simpler: A single winding inductor and a transformer with a single tap in its primary are employed. Thus, there is a considerable savings of cost and weight. The weight savings is particularly important for satellite applications.

U.S. Patent 3,670,234 shows a DC-DC converter; however, the energy storage is on the output of the transformer rather than on the input side as in the present invention. Because of this, saturation of the transformer core during one half cycle can result in high currents which could destroy the transistors. Also, if transistors 30 and 31 are on simultaneously, they will burn out. With the present invention, higher voltage generation is possible than with U.S. Patent 3,670,234 and multiple outputs are possible without the need for additional magnetics. The placement of the inductor in series with the transformer primary prevents saturation damage.

Other patents which disclose DC-DC converters having energy storage on the output side of the transformer are U.S. Patents 3,219,907; 3,196,335; 3,373,334; 3,660,749; 3,660,750; 3,701,937; 3,743,916; and 4,020,408.

Additional, more remote patents exist e.g., covering DC-DC converters with no energy storage.

## SUMMARY OF THE INVENTION

Four transistors or other switching devices, such as silicon controlled rectifiers, are switched on sequentially (1, 2, 3, and 4, in that order) causing current to rise and fall through an energy storage inductor on the input side of a transformer. The transistors can also be switched in the sequence 1, 4, 3, 2 to obtain the same results. In either case, this generates substantially a square wave AC voltage which is transformed by the transformer to the desired output voltage level. A number of regulated outputs can be employed; the number is limited only by the size of the transformer and the over-all power limit. One of the outputs is a principal regulated output and has a voltage feedback path which controls and regulates the output voltage by means of pulse width modulation of the principal transistors. The other outputs are auxiliary outputs. When the load on any output (principal or auxiliary) changes, all the voltages of all the outputs stay appreciably the same.

A current feedback path is provided to protect this circuit against overly high currents by narrowing the input driving pulses to/two of the transistors, thereby limiting the time during which they are switched on and reducing the output voltages of the system.

In the preferred embodiment, four driving transistors and two transformers are employed to drive the four switching transistors.

The converter exhibits a simple two-pole transfer function and exhibits high efficiency. Measured efficiency for this circuit ranged from 90 percent (at 100 percent duty cycle) to 87 percent (at 75 percent duty cycle).

## BRIEF DESCRIPTION OF THE DRAWINGS

These and other more detailed and specific objects and features of the present invention are more fully disclosed in the following specification, reference being had to the accompanying drawings, in which:

Figure 1 is a circuit diagram of the preferred embodiment of the present invention;

Figure 2 is a set of waveforms showing quiescent voltages and currents at key points throughout the preferred embodiment as a function of the timing sequence of the four main switching transistors; and

Figure 3 is a set of voltage waveforms depicting the operation of the driving circuit of the preferred embodiment.

## DESCRIPTION OF THE PREFERRED EMBODIMENT

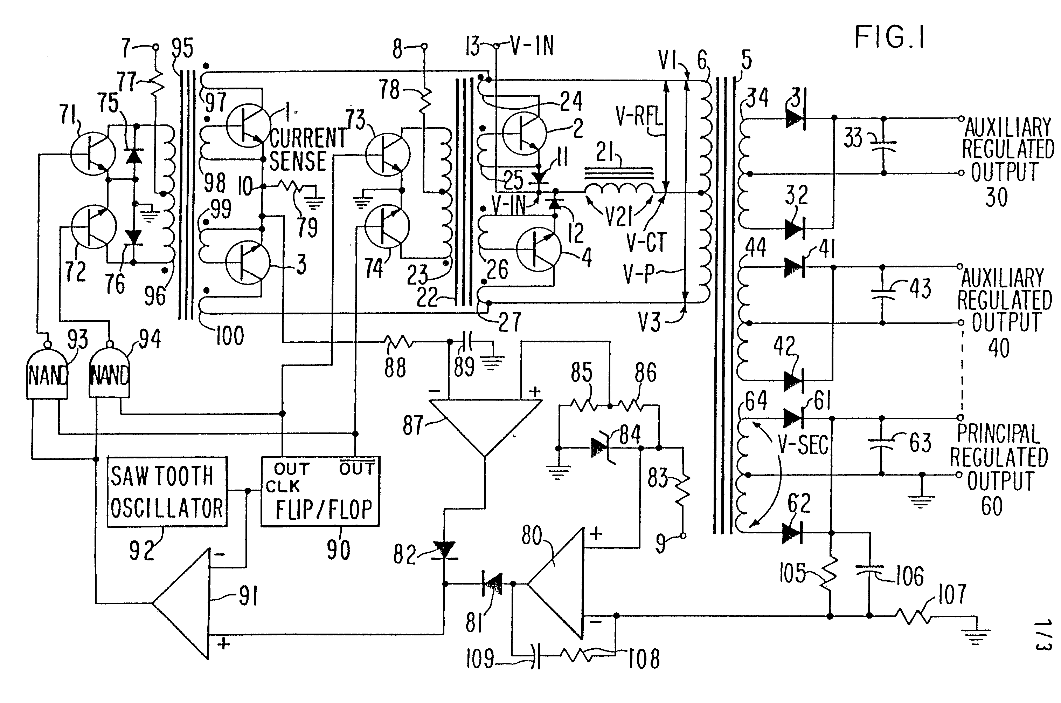

Figure 1 is a drawing of the preferred embodiment. Transistors 1, 2, 3, and 4 are the four major switching transistors of this invention and are switched sequentially, preferably in that order. They can be any suitable switching devices, such as silicon controlled rectifiers, but are preferably NPN transistors with the emitters of transistors 1 and 3 connected together. The emitters of transistors 2 and 4 are connected together via back-biased-diodes 11 and 12 (the cathodes of the diodes are connected together; the anode of diode 11 is connected to the emitter of transistor 2 and the anode of diode 12 is connected to the emitter of transistor 4). The collectors of transistors 1 and 3 are connected, via secondary windings 97 and 100, respectively, of transformer 95, with polarities as shown in Figure 1, to the two respective ends of primary winding 6 of transformer 5.

Transformers 95 and 22 are part of the driving circuits which drive, on the one hand, transistors 1 and 3 and on the other hand, transistors 2 and 4. The collectors of transistors 2 and 4 are connected to opposing ends of primary winding 6 of transformer 5 via secondary windings 24 and 27, respectively, of transformer 22 (with polarities as shown in Figure 1).

The cathodes of diodes 11 and 12 are connected to each other at point 13, which is the unregulated input DC voltage, V-IN, which one desires to regulate by means of the instant invention. This point 13 is also connected to one end of inductor 21, which is an iron core inductor that is 60 microhenries in the preferred embodiment. The greater the inductance, the flatter the slope of the current curve flowing through inductor 21. The voltage across inductor 21 is designated V21. The end of inductor 21 which is not connected to point 13 is connected to the center tap of primary winding 6 of transformer 5. The voltage at this point is designated V-CT. The voltage between the center tap and the top end of primary winding 6 is designated V-RFL. The voltage across the entire primary winding 6 is designated V-P. The voltage at the top end of the primary winding is V1 because it corresponds to the voltage on the collector of transistor 1 (except for a minor correction due to winding 97). The voltage at the bottom end of primary winding 6 of transformer 5 is designated V3 because it corresponds to the voltage on the collector of transistor 3 (except for a minor correction due to winding 100).

Transformer 5 is the isolation transformer between the input stage and the output stage. It reflects the AC produced by the switching transistors on its primary across to the various secondaries. Transformer 5 has a ferrite core rated for the typical 20 KHz operation of the present invention at one volt per turn with a cross section-

- 6 -

al area of one square centimeter.

A plurality of regulated outputs may be connected to the output of transformer 5. There is no limit to the number of these regulated outputs, except as forced by the transformer size and the overall power limitations of the system. The drawing shows circuits for three regulated outputs: 30, 40, and 60, with dotted lines representing a fourth regulated output 50. Each regulated output has a secondary winding of transformer 5. These are designated 34, 44, and 64 respectively. In each case, the voltage across the secondary is given by the formula (V-P) X (T-S) / (T-P), where T-S is the number of turns on the particular secondary for which the voltage is desired and T-P is the number of turns on the primary winding 6 of transformer 5.

Each regulated output is shown as having a fullwave rectifier which converts the alternating current at its secondary winding to direct current. However, it must be understood that these rectifiers could be omitted, in which case the circuit would function as a DC to AC converter. If one wishes to draw AC from one of the outputs, the load on it must exceed a certain threshold value dependent on the value of inductor 21. Some of the outputs could have DC and some of the outputs could have AC. For output 30, the full wave rectifier consists of diodes 31 and 32, whose anodes are connected to the upper and lower ends, respectively, of winding 34. The cathodes of diodes 31 and 32 are connected together and to one end of filter capacitor 33, the other end of which is connected to the center tap of winding 34. The output voltage for regulated output 30 is delivered at the two ends of capacitor 33.

Similarly, diodes 41 and 42 comprise the fullwave rectifier for output 40; 43 is the filter capacitor for this output. These are connected as in output 30.

Similarly, diodes 61 and 62 comprise the fullwave rectifier for output 60; 63 serves as the filter capacitor for output 60. Output 60 is the only output that has a voltage feedback path for providing regulation of the output voltage of the present invention; hence it is denominated the "principal regulated output"; the other outputs are denominated "auxiliary" ones. The voltage across winding 64 is designated V-SEC. The center tap of winding 64 is also connected to ground as shown in Figure 1. The purpose for this ground connection is to provide a reference for Zener diode 84 and other items in the feedback circuitry of the invention.

The voltage feedback path for regulated output 60 is connected between the commonly connected cathodes of diodes 61 and 62 and the minus input terminal of operational amplifier 80. Connected in series in this path is resistor 105. Connected in parallel across resistor 105 is capacitor 106. The negative input terminal of op amp 80 is connected via resistor 107 to ground. The negative input terminal of op amp 80 is also connected via resistor 108 and capacitor 109 to the output terminal of op amp 80.

Components 105, 106, 107, 108, and 109 provide frequency-gain compensation to facilitate stable operation of the converter. Resistors 105 and 107 together with capacitor 106 provide a "zero" to cancel one of the two "poles" caused by the presence of inductor 21 and the set of filter capacitors, which in this case comprise 33, 43, 53, and 63.

Resistor 108 in combination with capacitor 109 provide a "zero" to cancel the "pole" produced by op amp 80. Similarly, and for the same reason, a resistor and capacitor could be connected in series across the negative input terminal and the output terminal of op amp 87.

The plus input terminal of op amp 80 is connected to the cathode of Zener diode 84. Typically 6.2 volts appears at this point. The quiescent voltage drop between the two output terminals of output 60 can be varied by adjusting the values of the voltage divider network consisting of resistors 105 and 107. The cathode of diode 84 is also connected through resistor 83, which is typically 5000 ohms, to point 9, which is a 12 volt DC power supply. The anode of diode 84 is connected to ground. The two ends of diode 84 are connected together via voltage divider resistors 85 and 86, as shown in Figure 1. Resistor 85 typically is a 50 ohm resistor and resistor 86 is typically a 12,000 ohm resistor. The connection point of these two resistors is connected to the plus input terminal of op amp 87, which is the reference point for the current overload sensing circuitry of the present invention. Typically .05 volts are present at this terminal when the values of the components are as given in the preferred embodiment. The minus input terminal of op amp 87 is connected via AC filter capacitor 89 to ground, and also via resistor 88 (which sets the proper voltage drop across the op amp) and point 10, which is connected via resistor 79 and ground.

When an overload condition at the minus terminal of op amp 87 causes the voltage at this point to rise above the voltage at the plus terminal of op amp 87, the output of amplifier 87 falls, which, as explained below, results in a lowering of the voltage at the plus terminal of comparator 91, which causes a shortened time of operation for transistors 1 and 3, which causes the output voltage of the system to go down.

Similarly, when the feedback voltage at the negative terminal of op amp 80 exceeds the reference voltage present at the positive terminal of op amp 80, the output of 80 falls, which results, as will be more fully explained below, in the output pulses emanating from comparator 91 shortening, which causes a shortened period of time of operation of transistors 1 and 3, which causes the output voltage of the system to drop.

The base and emitter of transistor 2 are connected together via secondary winding 25 of transformer 22 with polarity as shown in Figure 1. Similarly, the base and emitter of transistor 4 are connected together via secondary winding 26 of transformer 22 with polarity as shown in Figure 1. Transformer 22 provides isolation between the driving transistors 73 and 74 and the switching transistors 2 and 4. This configuration is a very efficient way to drive these transistors. Similarly, transistors 71 and 72 drive transistors 1 and 3 with transformer 95 providing isolation therebetween.

The base and the emitter of transistor 1 are connected together via secondary winding 98 of transformer 95 with polarity as shown in Figure 1. Similarly, the base and emitter of transistor 3 are connected together via secondary winding 99 of transformer 95 with polarity as shown in Figure 1. The emitters of transistors 1 and 3 are connected together at point 10. Point 10 is connected via resistor 79 to ground. The function of resistor 79 is to place a voltage at point 10 as part of the current overload sensing circuit.

The output of op amp 87 is connected to the anode of diode 82, whose cathode is connected to the positive terminal of comparator 91. The output terminal of op amp 80 is connected to the anode of diode 81, whose cathode is connected to the positive terminal of comparator 91. The negative input terminal of comparator 91 is connected to the output of sawtooth oscillator 92 and the clock terminal of JK divide-by-two flip-flop 90.

Sawtooth oscillator 92 is typically an LM555 oscillator and has a frequency of twice the output frequency. For use of this invention as a DC to AC converter, the user of the system can select the output frequency he desires. For a DC to DC converter, the higher the frequency, the smaller the magnetics can be, but the efficiency of the system drops. For a 20 KHz output frequency, the sawtooth oscillator is set to operate at 40 KHz. The OUT terminal of flip-flop 90 is connected to one input terminal of NAND gate 94 and to the base of transistor 73. The $\overline{OUT}$ or inverse-OUT terminal of flip-flop 90 is connected to one input terminal of NAND gate 93 and to the base of transistor 74. The emitters of transistors 73 and 74 are connected together and to ground. The collectors of transistors 73 and 74 are connected to each other via primary winding 23 of transformer 22 with polarity as shown in Figure 1. The center tap of primary 23 is connected via resistor 78 to power supply connection point 8, which in the preferred embodiment is 12 volts DC. The function of this power supply is to provide power for transistors 73 and 74.

Transistors 71 and 72 drive switching transistors 1 and 3, respectively, and similarly, driving transistors 73 and 74 drive switching transistors 2 and 4, respectively. Transformers 95 and 22 provide isolation between these sets of transistors.

The output of voltage comparator 91 is connected to the input terminals of NAND gates 93 and 94 which are not connected to flip-flop 90. The output terminal of NAND gate 93 is connected to the base of transistor 71. The output terminal of NAND gate 94 is connected to the base of driver transistor 72. Transistors 71, 72, 73, and 74 are typically NPN 2N2222 transistors. The emitters of transistors 71 and 72 are connected to each other and to ground. This point is also connected to the anodes of diodes 75 and 76. The cathodes of diodes 75 and 76 are connected to the collectors of transistors 71 and 72, respectively. The collectors of 71 and 72 are connected to each other via primary winding 96 of transformer 95, with polarity as shown in Figure 1. The center tap of winding 96 is connected via resistor 77 to power supply voltage point 7, which in the preferred embodiment is 12 volts DC. The function of this circuit is to provide magnetizing current for transformer 95 through primary winding 96 and transistor 71 or 72. The function of diodes 75 and 76 is to provide a path for the transformer 95 magnetizing current and protection for transistors 71 and 72 when they are both turned on.

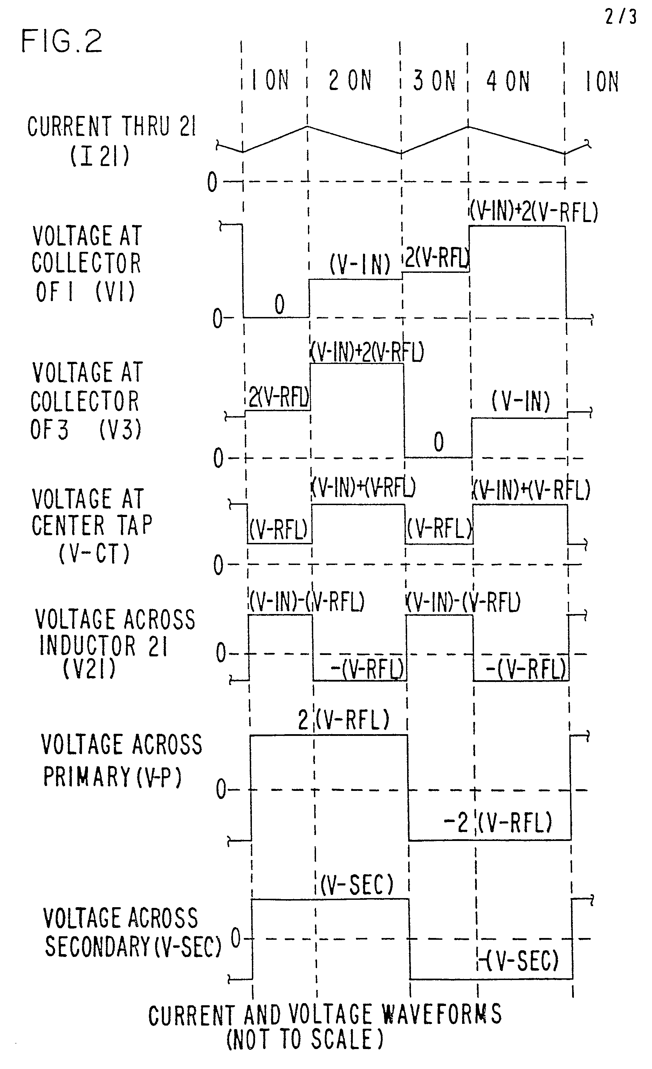

The operation of the subject invention is best seen by reference to Figure 2 in conjunction with Figure 1. Figure 2 illustrates typical current and voltage waveforms under quiescent operating conditions, i.e. the circuit has been operating for some time without input voltage change or output load change.

For operation of the circuit, the turns ratio of transformer 5 is set so that V-RFL is less than V-IN. The transistors are switched on and off in continuous sequence 1, 2, 3, and 4. However, this sequence may also be 1, 4, 3, and 2 and the system would work as well. For simplicity, the voltage drops through all semi-conductor devices and wiring is assumed to be zero in the following explanation.

First, transistor 1 is turned on. When transistor 1 is turned on, current flows from V-IN

- 11 -

through inductor 21 through the top half of primary winding 6 and through transistor 1 to return (ground). The current path through transistor 2 is blocked by the reverse biased diode 11. Note that since the current flow is blocked by diode 11, base drive can be applied to transistor 2 at this time without turning transistor 2 on. The change in current through inductor 21 is given by the formula:

$$\Delta i_{21} = \frac{(V21) \, \Delta t}{L21} = \frac{[(V\text{-IN}) - (V\text{-RFL})]}{L21} t_{1\text{-ON}} \qquad (1)$$

where L21 is the inductance of inductor 21 and $t_{1\text{-ON}}$ is the time that transistor 1 is on.

Since the turns ratio of transformer 5 is such that V-RFL is less than V-IN, the current through inductor 21 is increasing (see Figure 2). During this time, the collector of transistor 1 is at return potential. Thus, V1 is zero. The voltage at V3 is therefore $2 \cdot (V\text{-RFL})$ due to the transformer action of transformer 5.

Next, transistor 1 is turned off and transistor 2 is turned on. The current flowing through inductor 21 causes the voltage V1 to increase until current flows through transistor 2, diode 11, inductor 21, and the top half of winding 6. The change in current through inductor 21 is given by the formula:

$$\Delta i_{21} = \frac{(V21) \, \Delta t}{L21} = - \frac{(V\text{-RFL})}{L21} t_{2\text{-ON}} \qquad (2)$$

where $t_{2\text{-ON}}$ is the time that transistor 2 is on.

The voltage V-RFL is opposing the inductor 21 current flow, so the current through inductor 21 is decreasing. Since the voltage at V1 equals V-IN, it follows that voltage V3 equals $(V\text{-IN}) + 2 \cdot (V\text{-RFL})$.

Next, transistor 3 is turned on. The operation of this is similar to the case where transistor 1 is turned on, except that current is routed through the lower half of winding 6 so that transformer 5 can operate as a transformer, i.e., a square wave appears across its primary.

Next, transistor 4 is switched on. The result is similar to when transistor 2 is switched on. Current continues to flow through the lower half of winding 6.

For quiescent operation, the average current through inductor 21 must be constant, so:

$$\left|\Delta i_{21} \, (1\text{-ON})\right| = \left|\Delta i_{21} \, (2\text{-ON})\right| = \left|\Delta i_{21} \, (3\text{-ON})\right| = \left|\Delta i_{21} \, (4\text{-ON})\right|$$

Therefore, the absolute values of equations 1 and 2 can be set equal:

$$\frac{\left[(V\text{-IN}) - (V\text{-RFL})\right]}{L21} t_{1\text{-ON}} = \frac{(V\text{-RFL})}{L21} t_{2\text{-ON}}$$

Cancelling L21 from each side and rearranging:

$$\frac{(V\text{-IN}) - (V\text{-RFL})}{(V\text{-RFL})} = \frac{t_{2\text{-ON}}}{t_{1\text{-ON}}}.$$

Adding 1 to each side and inverting:

$$\frac{(V\text{-RFL})}{(V\text{-IN})} = \frac{t_{1\text{-ON}}}{t_{1\text{-ON}} + t_{2\text{-ON}}} \tag{3}$$

The duty cycle of the device is defined by:

$$\frac{t_{1\text{-ON}}}{t_{1\text{-ON}} + t_{2\text{-ON}}} = \frac{t_{3\text{-ON}}}{t_{3\text{-ON}} + t_{4\text{-ON}}}$$

V-RFL is related to the desired output voltage by the turns ratio of transformer 5. Hence, according to the above equation (3), the output versus the input can be controlled by varying the duty cycle. The duty cycle can be varied by adjusting the reference voltages on the positive input terminals of comparators 80 and 87. When V-IN equals V-RFL, primary current flows through switching transistors 1 and 3 only, i.e., $t_{2\text{-ON}} = 0$ and $t_{4\text{-ON}} = 0$. This results in a 100% duty cycle and maximum possible efficiency for the switching regulator. At higher values of V-IN, assuming V-RFL stays constant, primary current flows through switching transistors 2 and 4 and corresponding diodes 11 and 12 for a portion of each cycle. Most other switching regulator designs have current flowing through two series switching elements at all times, resulting in considerably reduced efficiency. The efficiency for this particular circuit ranges from 90 percent (when the transistors are operated at 100 percent duty cycle) to 87 percent when the transistors are operated at 75 percent duty cycle.

The voltage V-RFL can be reduced to any value desired by controlling the duty cycle of the converter. Depending upon the relative values of the reference voltages

- 13 -

on comparators 80 and 87 and the corresponding signals applied to the negative input terminals of these comparators, the converter can be controlled to provide current limiting as desired for "turn-on inrush" current limiting, accidental overload, or applications where current control is required.

Another desirable feature of the present invention is that continuous current flow to the various outputs reduces output filter requirements.

It is further to be noted that inductor 21, which is in series with the input bus voltage V-IN, limits the primary current in the event transformer 5 saturates during the switching cycle. This protects the power switching transistors from destruction.

The converter exhibits a simple two pole transfer function, whereas many prior art converters have more complex transfer functions. The simple two pole transfer function of the present invention is advantageous because it enhances the transient response characteristics, e.g., caused by switching output load levels.

The following is an explanation of the pulse width modulation which is utilized for both the overcurrent sense circuitry and the voltage feedback path from the principal regulated output 60.

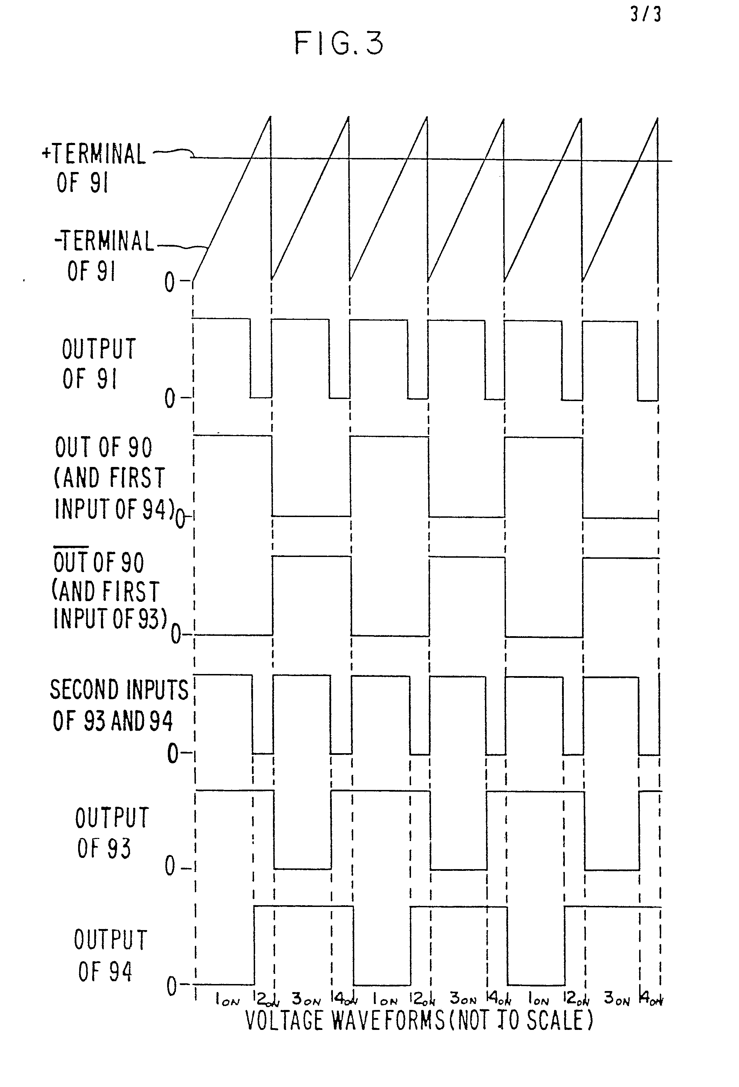

The operation of this feedback circuitry can best be understood in conjunction with the operation of the drive circuitry, which is depicted graphically as a set of voltage waveforms in Figure 3.

The first waveform of Figure 3 shows the sawtooth pattern of voltage which is generated by sawtooth oscillator 92. The frequency of this output is twice the desired output operating frequency of the converter. This signal is applied to the negative input terminal of comparator 91. Superimposed on this waveform is a horizontal line, representing the signal which is on the positive terminal of comparator 91. This is the error feedback signal. When the converter is operating in a quiescent state, the level of this signal will be constant. It does not have to be at the mid-point of the voltage swings of the

- 14 -

sawtooth pattern. When it is at the mid-point, the duty cycle of the system is 50 percent and the positive and zero pulses leaving NAND gates 93 and 94 are evenly spaced, as will be seen below. Figure 3 illustrates the case where the feedback signal on said positive terminal of comparator 91 is in a quiescent state approximately three quarters of the way to the top of the peaks of the sawtooth pattern; hence, the duty cycle of the converter is at 75%.

The second waveform shows the output voltage of comparator 91. As is standard, the output of comparator 91 is a "one" when the voltage of the signal on its positive input terminal exceeds the voltage of the signal on its negative terminal; otherwise the output of comparator 91 is a "zero".

The next two waveforms are the waveforms of the output voltage of the OUT terminal of flip-flop 90 and the output voltage of the inverse-OUT terminal of flip-flop 90, respectively. Note that OUT is high when inverse-OUT is low, and vice versa. These two terminals change state when the sawtooth plunges downward from its high point to its low point in its cycle. Also note that the output of the OUT terminal of flip-flop 90 is applied to a first input terminal of NAND gate 94 and the output of the inverse-OUT terminal of flip-flop 90 is applied to a first input terminal of NAND gate 93.

The next waveform depicts the input signal applied to the second input terminals of NAND gates 93 and 94. This waveform coincides with the waveform of the output of comparator 91.

The next two waveforms depict the outputs of NAND gates 93 and 94, respectively. The shape of these waveforms is determined by the Boolean logic governing a NAND gate, which is that if either or both input terminals to a NAND gate is zero, then the output will be a one; otherwise, the output will be a zero.

Finally, the notation on the bottom of Figure 3 indicates which of the switching transistors will be on, based upon what is appearing on the outputs of NAND gates 93 and 94 and flip-flop 90. In this regard, note that the

- 15 -

way the circuit is devised, voltage is applied to the base of transistor 73, and hence transistor 2, for a full half-cycle. During this half-cycle, when transistor 1 is on, transistor 2 will not be on. When transistor 1 is off, transistor 2 will be on. Similarly, during the second half-cycle, voltage is applied to the base of transistor 74, and hence transistor 4, for the full half-cycle. During this half-cycle, when transistor 3 is on, transistor 4 is off; when transistor 3 is off, transistor 4 is on. Also note that when voltage is applied to the bases of both transistors 71 and 72 simultaneously, both will be turned-on, shorting winding 96 of transformer 95; hence, voltage will not be applied to the bases of either transistors 1 or 3, and therefore both these latter transistors will be off. On the other hand, when voltage is applied to the base of transistor 71, and not to the base of transistor 72, voltage will be applied to the base of transistor 1 and that transistor will be on. Similarly, when voltage is applied to the base of transistor 72, and not to the base of transistor 71, voltage will be applied to the base of transistor 3 and that transistor will be on. Keeping these constraints in mind, it can be seen that the sequence of switching of the transistors is 1 on, 2 on, 3 on, and 4 on, as depicted at the bottom of Figure 3.

The following describes what happens when the voltage V-SEC goes up beyond the desired level, or when the current in current sense resistor 79 exceeds the desired level. The reference levels for the excessive voltage and current are applied at the positive input terminals of amplifiers 80 and 87, respectively. Their values can be adjusted by adjusting the values of Zener diode 84 and resistors 85 and 86. Additionally, resistors 105 and 107 can be adjusted to give an additional means of setting the output voltage for the voltage portion of the feedback circuit.

If V-SEC is too high, the signal appearing at the negative input terminal of amplifier 80 will go up, which causes the output of amplifier 80 to go down. Similarly, if the current sensed by resistor 79 is too high, the voltage appearing at the negative input terminal of amplifier 87 will go up, causing the output of amplifier 87 to go down. Thus, in either case the signal appearing at the positive input terminal of comparator 91 will go down. This causes the horizontal line of the first waveform of Figure 3 to go down. This results in a narrowing of the first (positive) pulse of the second waveform of Figure 3, i.e., the waveform representing the output of comparator 91. This results in a lessening of the duty cycle of the converter, i.e. transistors 1 and 3 are switched on for a shorter period of time. And as can be seen from equation (3) above, this results in a lowering of the output of the system as desired.

This completes the description of the operation of the preferred embodiment. The above description is included to illustrate the operation of said preferred embodiment, and is not meant to limit the scope of the invention. The scope of the invention is to be limited only by the following claims. From the above discussion, many variations will be apparent to one skilled in the art that would yet be encompassed by the spirit and scope of the invention.

## CLAIMS

What is claimed is:

1. A regulated DC-AC converter for regulating the voltage of an input voltage source comprising:

four switching devices sequentially switched on one at a time;

a transformer having a primary and at least one secondary; and

energy storage means connected to said transformer primary wherein during two of said four switching device "on" periods, said energy storage means discharges directly through said transformer without discharging any energy through said input voltage source.

2. A regulated DC-AC converter for regulating the voltage of an input voltage source comprising:

four switching devices which are sequentially activated during four subcycles of an operational cycle;

a transformer having a primary with a single tap and at least one secondary, the primary being connected to each of said four switching devices; and

energy storage means connected to said tap and to said input voltage source.

3. The converter of claim 2 further comprising current sense means connected to at least one of said switching devices wherein the appearance of a higher current in said current sense means results in a decrease in the duty cycle of said converter and the appearance of a lower current in said current sense means results in an increase in the duty cycle of said converter.

4. The converter of claim 2 wherein said converter is adapted for use as a DC-DC converter by virtue of rectification means connected to at least one secondary.

5. The converter of claim 4 wherein a plurality of outputs are connected to said transformer wherein each output is connected to a separate secondary.

6. The converter of claim 5 wherein one of said outputs is a principal regulated output, having rectification means, and the other outputs are each auxiliary regulated outputs.

7. The converter of claim 6 further comprising driving means connected to each of said four switching devices;
wherein a voltage feedback path is connected between said principal regulated output and said driving means.

8. The converter of claim 7 wherein the appearance of a declining voltage on said voltage feedback path results in an increase in the duty cycle of said converter and the appearance of a rising voltage on said feedback path results in a decrease in the duty cycle of said converter.

9. The converter of claim 2 wherein energy is stored in said energy storage means during said first and third subcycles and energy is removed from said energy storage means during said second and fourth subcycles.

10. The converter of claim 2 wherein current flows in a first direction through said transformer primary during said first and second subcycles and current flows in a second direction through said transformer primary during said third and fourth subcycles.

FIG.1

1/3

FIG.2

CURRENT AND VOLTAGE WAVEFORMS
(NOT TO SCALE)

FIG.3

+TERMINAL OF 91

-TERMINAL OF 91          0

OUTPUT OF 91            0

OUT OF 90 (AND FIRST INPUT OF 94)  0

$\overline{OUT}$ OF 90 (AND FIRST INPUT OF 93)  0

SECOND INPUTS OF 93 AND 94   0

OUTPUT OF 93    0

OUTPUT OF 94    0

1ON 12ON 3ON 14ON 1ON 12ON 3ON 14ON 1ON 12ON 3ON 14ON

VOLTAGE WAVEFORMS (NOT TO SCALE)

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | IBM TECHNICAL DISCLOSURE BULLETIN, vol. 16, no. 10, March 1974, New York, USA J.R. KINNARD "DC to DC converter using autotransformer technique", pages 3130-3131.<br>* The whole document * | 1 | H 02 M 3/155<br>H 02 M 7/155 |
| | -- | | |
| | US - A - 3 388 311 (DE LA LASTRA)<br>* Column 3, line 38 to column 6, line 45 * | 1,2,4, 9 | |
| | -- | | TECHNICAL FIELDS SEARCHED (Int.Cl.) |
| | US - A - 3 735 235 (BELL)<br>* Column 3, line 38 to column 11, line 29 * | 1,2,4, 9 | H 02 M 3/155<br>7/155 |
| | -- | | |
| | US - A - 4 150 424 (NUECHTERLEIN)<br>* Column 2, line 46 to column 6, line 68 * | 3,4,7, 8 | |
| | -- | | |
| | US - A - 3 118 115 (LEE JENSON)<br>* Column 2, line 5 to column 6, line 7 * | 1 | |
| | ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-07-1980 | BERTIN |

EPO Form 1503.1  06.78